# EUROPÄISCHE PATENTSCHRIFT

(11) **EP 1 461 477 B1**
(45) Veröffentlichungstag und Bekanntmachung des Hinweises auf die Patenterteilung: **22.03.2006**
(21) Anmeldenummer: 02805765.1
(22) Anmeldetag: 19.12.2002
(51) Int. Cl.: C25C 3/08, C25C 3/16, C04B 35/52

(54) **VERFAHREN ZUM GRAPHITIEREN VON KATHODENBLÖCKEN**
METHOD FOR GRAPHITIZING CATHODE BLOCKS
PROCEDE DE GRAPHITISATION DE BLOCS CATHODIQUES

(30) Priorität: 28.12.2001 DE 10164014
(43) Veröffentlichungstag der Anmeldung: 29.09.2004
(73) Patentinhaber: SGL CARBON AG, 65203 Wiesbaden (DE)
(72) Erfinder: DAIMER, Johann, 64546 Mörfelden-Walldorf (DE); HILTMANN, Frank, 65830 Kriftel (DE); MITTAG, Jörg, 65187 Wiesbaden (DE)
(86) Internationale Anmeldenummer: PCT/EP2002/014552
(87) Internationale Veröffentlichungsnummer: WO 2003/056071

(56) Entgegenhaltungen:
- DE-A- 3 606 380
- FR-A- 2 789 091
- US-A- 3 787 311
- US-A1- 2002 000 373
- US-B1- 6 231 745

## Beschreibung

Die Erfindung betrifft ein Verfahren zum Graphitieren von Kathodenblöcken insbesondere für die elektrolytische Herstellung von Aluminium.

Bei der elektrolytischen Herstellung von Aluminium nach dem Hall-Héroult-Verfahren werden Elektrolysezellen eingesetzt, die einen aus einer Vielzahl von Blöcken zusammengesetzten Boden umfassen, der als Kathode wirkt. Der Elektrolyt ist eine Schmelze, im wesentlichen eine Lösung von Aluminiumoxid in Kryolith. Die Arbeitstemperatur liegt beispielsweise bei ca. 1000 °C. Das elektrolytisch abgeschiedene geschmolzene Aluminium sammelt sich auf dem Boden der Zelle unter einer Schicht des Elektrolyten. Um die Zellen ist ein metallisches Gehäuse (bevorzugt Stahl) mit einer Auskleidung aus hochtemperaturbeständigem Material.

Das Material der Kathodenblöcke ist wegen der erforderlichen chemischen und thermischen Beständigkeit bevorzugt Kohlenstoff, der durch thermische Behandlung teilweise oder vollständig graphitiert sein kann. Zur Herstellung solcher Kathodenblöcke werden Mischungen von Pechen, Koksen, Anthrazit und/oder Graphit in ausgewählten Teilchengrößen bzw. Teilchengrößenverteilungen für die Feststoffe gemischt, geformt und gebrannt und gegebenenfalls (teilweise) graphitiert. Das Brennen (Carbonisierung) erfolgt üblicherweise bei Temperaturen von ca. 1200 °C, die Graphitierung üblicherweise bei Temperaturen von über ca. 2400 °C.

Während graphitierte Kathoden wegen ihrer höheren elektrischen Leitfähigkeit bevorzugt werden, zeigen sie eine stärkere Abnutzung während des Betriebs, entsprechend einer mittleren jährlichen Abnahme ihrer Dicke von bis zu 80 mm. Diese Abnutzung ist nicht gleichmäßig über die Länge der Kathodenblöcke (entsprechend der Breite der Zelle) verteilt, sondern verändert die Oberfläche der Kathodenblöcke zu einem W-förmigen Profil. Durch den ungleichmäßigen Abtrag wird die Nutzungsdauer der Kathodenblöcke begrenzt durch die Stellen mit dem größten Abtrag.

Eine Möglichkeit, den Abtrag über die Länge des Käthodenblocks zu vergleichmäßigen und damit die Nutzungsdauer zu verlängern, besteht darin, die Kathodenblöcke so auszuführen, daß ihr elektrischer Widerstand über die Länge variiert, derart daß die Stromdichte (und damit die Abnutzung) über ihre Länge gleichmäßig ist oder zumindest eine möglichst geringe Abweichung über die Länge von ihrem Mittelwert aufweist

Eine Lösung ist in DE 20 61 263 beschrieben, wobei zusammengesetzte Kathoden gebildet werden entweder aus mehreren Kohlenstoffblöcken mit unterschiedlicher elektrischer Leitfähigkeit, die so angeordnet werden, daß sich eine gleichmäßige oder annähernd gleichmäßige Stromverteilung ergibt, oder aus Kohlenstoffblöcken, deren elektrische Widerstände in Richtung der kathodischen Ableitungen kontinuierlich zunehmen. Die Anzahl der Kohlenstoffblöcke und deren elektrischer Widerstand richten sich jeweils nach Zellengröße und Zellentyp, sie müssen für jeden Fall neu errechnet werden. Kathodenblöcke aus einer Vielzahl von einzelnen Kohlenstoff-Blöcken erfordern einen hohen Aufwand bei der Konstruktion; auch müssen die Stoßstellen jeweils gut abgedichtet werden, um ein Ausfließen des flüssigen Aluminiums an den Stoßstellen zu vermeiden.

In der WO 00/46426 ist eine Graphitkathode beschrieben worden, die aus einem einzelnen Block besteht, der eine über seine Länge veränderliche elektrische Leitfähigkeit aufweist, wobei die Leitfähigkeit an den Enden des Blocks niedriger ist als in der Mitte. Diese ungleichmäßige Verteilung der elektrischen Leitfähigkeit wird erreicht, indem während der Graphitierung die Endzonen auf eine Temperatur von 2200 bis 2500 °C gebracht werden, während die mittlere Zone einer Temperatur von 2700 bis 3000 °C ausgesetzt wird. Diese unterschiedliche Wärmebehandlung kann gemäß dieser Lehre durch zwei Weisen erreicht werden: einmal kann die Wärmeableitung im Graphitierungsofen unterschiedlich begrenzt werden, oder es können Wärmesenken in der Nachbarschaft der Endzonen eingebracht werden, die den Wärmeverlust erhöhen. Bei einer Quergraphitierung wird dabei die Dichte der wärmeisolierenden Schüttung so verändert, daß der Wärmeverlust über die Länge der Kathoden ungleichmäßig wird und damit die gewünschten Temperaturen eingestellt werden. Auch bei der Längsgraphitierung kann durch unterschiedliche Ausführung der wärmeisolierenden Schüttung der Wärmeverlust in der Nähe der Enden vergrößert werden, oder es werden zu diesem Zweck wärmeableitende Körper bevorzugt aus Graphit in deren Nähe eingebracht, die einen stärkeren Wärmeabfluß nach außen zur Ofenwand hin bewirken.

Gemäß einer anderen Methode kann der Unterschied der Wärmebehandlung durch lokale Veränderung der Stromdichte erfolgen, mit der Folge unterschiedlicher Wärmeentwicklung.

Diese Veränderung der Stromdichte kann gemäß der Lehre durch unterschiedliche Widerstände der leitenden Schüttung zwischen zwei Kathoden in einem Acheson-Ofen (Quergraphitierung) erfolgen, für ein Längsgraphitierungsverfahren ist kein derartige Lösung angegeben.

Diese bekannten Methoden weisen für die Praxis erhebliche Nachteile auf. Ein Unterschied von 500 °C für die gewünschten Graphitierungstemperaturen in der Mitte und an den Enden der Kathoden ist durch Wärmesenken allein nicht erreichbar. Der höhere Wärmeverlust nach der Seite des Ofens bedeutet auch eine höhere thermische Beanspruchung, die die Konstruktion des Ofens verteuert oder seine Lebensdauer vermindert. Schließlich ist eine Inhomogenität der wärmeisolierenden bzw. der leitenden Schüttung wenig praktikabel, da das Schüttungsmaterial zur Befüllung in mehreren Schritten eingebracht werden müßte und nach dem Abschluß des Ofenzyklus und dem Entfernen der Kathoden wieder entsprechend seiner Wärmeleitung bzw. elektrischen Leitfähigkeit klassiert werden müßte.

Es ist daher die Aufgabe der vorliegenden Erfindung, ein praktikables Verfahren zur Verfügung zu stellen, um Kathodenblöcke herzustellen, die über ihre Länge eine unterschiedliche elektrische Leitfähigkeit aufweisen.

Die Aufgabe wird gelöst durch ein Verfahren nach der Methode der Längsgraphitierung, bei dem in einem Längsgraphitierungsofen die Elektrodenblöcke so angeordnet sind, daß die leitende Verbindung zwischen den einzelnen Elektrodenblöcken durch einen leitfähigen Kontaktkörper hergestellt wird, der die Endflächen zweier aufeinanderfolgender Elektrodenblöcke berührt und der an der der Oberseite des Ofens zugewandten Seite einen nach oben gerichteten Fortsatz aufweist, der nicht über die Oberfläche der Schüttung ragt Dieser Fortsatz bewirkt eine Ableitung der Wärme aus der endnahen Zone der Elektrodenblöcke in die über den Elektrodenblöcken liegende Schüttung. Dabei ist es bevorzugt, daß der Fortsatz möglichst weit nach oben ragt, um eine gute Wärmeableitung zu bewirken. Bevorzugt weist der Fortsatz kreisförmigen oder rechteckförmigen Querschnitt auf. Es ist weiter bevorzugt, daß die Oberfläche des Fortsatzes mindestens 20 % der Endfläche der Elektrodenblöcke beträgt.

Durch die gerichtete Ableitung der Wärme nach oben in die über den Elektrodenblöcken liegende Schüttung wird vermieden, daß - wie bei einer ungerichteten Ableitung der Wärme erforderlich - der Abstand der Stränge der Elektrodenblöcke von der Ofenwand erhöht werden müßte oder die Ofenwände so auszuführen, daß sie höheren Temperaturen widerstehen können. Beide konstruktive Änderungen würden zu einer Verteuerung der Öfen führen.

Die Kontaktflächen der Kontaktkörper werden bevorzugt plan ausgeführt, um einen guten elektrischen Kontakt mit den planen Endflächen der Elektrodenblöcke zu gewährleisten. Abweichungen ergeben punktförmige Auflagen und damit verbunden Spitzen in der Stromdichte um die Auflagepunkte. Dies würde an dieser Stelle zu einer Überhitzung und stärkeren Graphitierung, also zu einem unerwünschten lokalen Anstieg der elektrischen Leitfähigkeit führen. Diese Probleme bei der geometrischen Ausführung lassen sich gemäß einer bevorzugten Ausführungsform der Erfindung vermeiden, wenn die Endflächen der Elektrodenblöcke als Kugelkappen, Kegelstümpfe, Pyramidenstümpfe, Anordnungen von mehreren dieser Formen auf einer Endfläche, oder als Kamm- oder Zickzack-förmige Profile ausgebildet werden, wobei die Kontaktkörper das dazu passende "negative" Profil, also Vertiefungen in Form von Kugelkappen, Kegelstümpfen etc. aufweisen. Derartige geometrische Anordnungen verhindern punktförmige Kontakte und sorgen daher für eine gleichmäßige Stromdichte und eine gleichmäßige Ableitung der Wärme über die Endflächen der Elektrodenblöcke auf die Kontaktkörper.

Solche bevorzugten Ausführungsformen der Erfindung sind in den Zeichnungen dargestellt. Dabei zeigen
- Fig. 1: eine Draufsicht auf eine Stoßstelle von zwei Elektrodenblöcken mit einem dazwischen liegenden Kontaktkörper mit planen Flächen,
- Fig. 2: eine Draufsicht auf eine Stoßstelle von zwei Elektrodenblöcken mit konvex verrundeten (Kugelkappen-förmigen) Endflächen mit einem dazwischen liegenden Kontaktkörper mit konkav verrundeten Flächen,
- Fig. 3: eine Draufsicht auf eine Stoßstelle von zwei Elektrodenblöcken mit gefasten Endflächen mit einem dazwischen liegenden Kontaktkörper mit dazu angepaßten Kontaktflächen, die eine Trapezoid-artige Ausnehmung aufweisen,
- Fig. 4: eine Vorderansicht auf eine Endfläche eines Elektrodenblocks mit einer Vielzahl von Kugelkappen-förmigen Verrundungen.

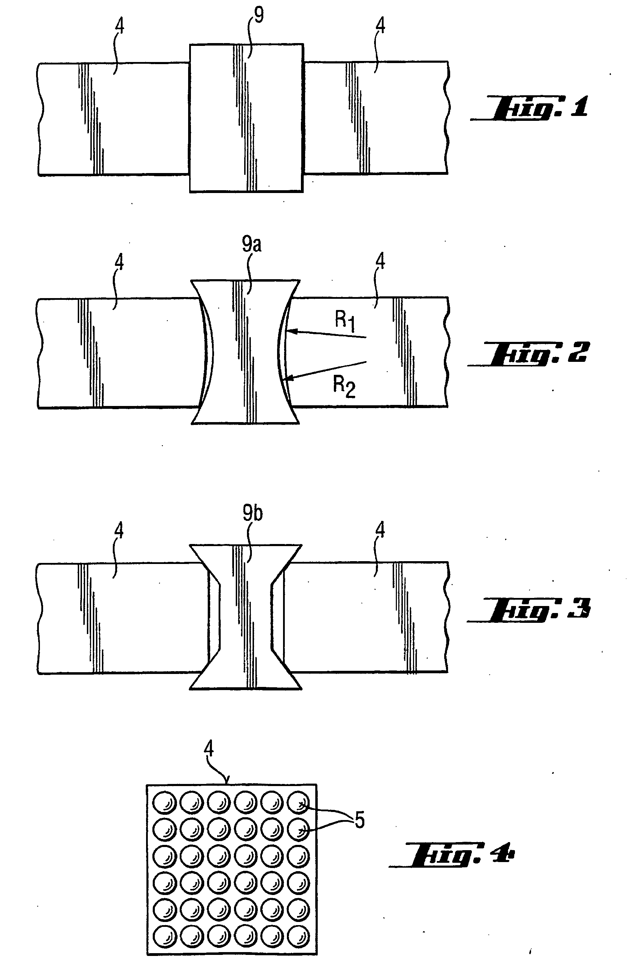

Im einzelnen zeigt Fig.1 einen Kontaktkörper 9 mit planen Flächen in der Sicht von oben, der zwischen zwei als 4 bezeichneten Elektrodenblöcken liegt und den elektrischen Kontakt herstellt

In der Fig. 2 ist eine Ausführungsform dargestellt, bei der die beiden benachbarten Elektrodenblöcke an den zueinander gerichteten Enden jeweils in Form einer Kugelkappe konvex verrundet sind, mit einem Radius R₁. Der Kontaktkörper 9a zwischen ihnen ist konkav verrundet, ebenfalls in Form einer Kugelkappe, mit dem Radius R₂. Bevorzugt ist R₂ kleiner als R₁, höchstens gleich R₁. Insbesondere beträgt R₂ zwischen 80 und 99,5 % von R₁, bevorzugt zwischen 85 und 99 %, und besonders bevorzugt zwischen 90 und 98 % von R₁.

In der Fig. 3 ist wiederum in der Draufsicht eine Ausführungsform dargestellt, bei der zwei Kanten der Endflächen der Elektrodenblöcke 4 gefast sind, also die Enden der Elektrodenblöcke 4 einen trapezförmigen Aufriß aufweisen. Der Kontaktkörper 9b weist dazu passende Ausnehmungen mit trapezförmigem Querschnitt auf.

Es ist ebenfalls möglich, die Oberflächen der Elektrodenblöcke mit Kegelstumpf-förmigen Erhebungen auszustatten, wobei dann die Oberfläche des Kontaktkörpers entsprechende konkave Kegelstumpf-förmige Ausnehmungen aufweist. Der Öffnungswinkel der Kegelstumpf-förmigen Erhebungen ist dabei mindestens genauso groß wie der der Kegelstumpf-förmigen Ausnehmungen, und kann bevorzugt bis um 5° größer sein als dieser. Die Erhebungen und Ausnehmungen können anstelle der Form von Kegelstümpfen auch die Form von Pyramidenstümpfen aufweisen, wobei dieselben Bedingungen für den Öffnungswinkel gelten.

In der Fig. 4 schließlich ist die Vorderansicht auf eine der Endflächen eines Elektrodenblocks 4 dargestellt, wobei hier 36 einzelne kugelkappenförmige konvexe Erhebungen auf der Endfläche sind. Die passende Fläche des Kontaktkörpers weist entsprechend 36 konkave Ausnehmungen in Gestalt von Kugelkappen auf. Für die Radien gilt das unter der Erläuterung zu Fig. 2 gesagte.

Falls die Endflächen der Elektrodenblöcke und die Kontaktflächen des Kontaktkötpers jeweils ein ineinandergreifendes kammförmiges oder zickzackförmiges Profil aufweisen, so sind die Profile bevorzugt so ausgebildet, daß das Verhältnis von Berührungsfläche zu der Querschnittsfläche an der betreffenden Stelle in Zentrum der Endflächen bzw. der Kontaktfläche nicht mehr als 98 % desselben Verhältnisses in den Außenbereichen der Endflächen der Elektrodenblöcke beträgt.

Durch geeignete geometrische Ausbildung der Kontaktflächen der Elektrodenblöcke und des Kontaktkörpers läßt sich erreichen, daß die Stromdichte im Zentrum der Endfläche der Elektrodenblöcke nicht mehr als 90 % der Stromdichte in den Außenbereichen der Endflächen der Elektrodenblöcke beträgt

Bevorzugt besteht der Kontaktkörper zumindest anteilig aus Graphit, wegen dessen guter elektrischer und gleichzeitig thermischer Leitfähigkeit und wegen seiner Beständigkeit gegen die auftretenden Temperaturen. Dabei kann Naturgraphit oder synthetischer Graphit eingesetzt werden. Es ist auch möglich, die Kontaktkörper aus Kohlenstoffwerkstoffen herzustellen, die mit Fasern verstärkt sein können, und die Anteile von Naturgraphit oder synthetischem Graphit enthalten.

Die so hergestellten Elektrodenblöcke, insbesondere Kathodenblöcke, lassen sich bei der elektrolytischen Reduktion von Aluminiumoxid einsetzen und besitzen wegen ihrer ungleichmäßigen Leitfähigkeitsverteilung über ihre Länge eine deutlich höhere Lebensdauer als solche mit über die Länge konstanter elektrischer Leitfähigkeit.

### Bezugszeichenliste

- 4: Elektrodenblock
- 9: Kontaktkörper mit planen Kontaktflächen
- 9a: Kontaktkörper mit konkaven Kugelkappen-förmigen Ausnehmungen
- 9b: Kontaktkörper mit Ausnehmungen mit trapezförmigem Querschnitt
- R₁: Radius der Kugelkappen auf der Endfläche des Elektrodenblockes
- R₂: Radius der Kugelkappen-förmigen Ausnehmung in dem Kontaktkörper

## Patentansprüche

1. Verfahren zum Graphitieren von Kathodenblöcken für die elektrolytische Gewinnung von Aluminium nach der Methode der Längsgraphitierung, **dadurch gekennzeichnet, daß** in einem Längsgraphitierungsofen die Kathodenblöcke so angeordnet sind, daß die leitende Verbindung zwischen den einzelnen Elektrodenblöcken durch einen leitfähigen Kontaktkörper hergestellt wird, der die Endflächen zweier aufeinanderfolgender Elektrodenblöcke berührt und der an der der Oberseite des Ofens zugewandten Seite einen nach oben gerichteten Fortsatz aufweist, der nicht über die Oberfläche der Schüttung ragt.

2. Verfahren nach Anspruch 1, **dadurch gekennzeichnet, daß** der Kontaktkörper aus Graphit ausgebildet ist.

3. Verfahren nach Anspruch 1, **dadurch gekennzeichnet, daß** der Kontaktkörper unter Zusatz von Naturgraphit ausgebildet ist

4. Verfahren nach Anspruch 1, **dadurch gekennzeichnet, daß** die Endflächen der Elektrodenblöcke und die Kontaktflächen des Kontaktkörpers derart ausgebildet sind, daß die Stromdichte im Zentrum der Endfläche der Elektrodenblöcke nicht mehr als 90 % der Stromdichte in den Außenbereichen der Endflächen der Elektrodenblöcke beträgt.

5. Verfahren nach Anspruch 4, **dadurch gekennzeichnet, daß** die Endflächen der Elektrodenblöcke in Form von konvexen Kugelkappen und die Kontaktflächen des Kontaktkörpers in Form von konkaven Kugelkappen ausgebildet sind, wobei der Radius der konkaven Kugelkappen des Kontaktkörpers höchstens 98 % des Radius der Kugelkappen der Elektrodenblock-Endflächen beträgt

6. Verfahren nach Anspruch 4, **dadurch gekennzeichnet, daß** die Endflächen der Elektrodenblöcke in Form von Kegelstümpfen und die Kontaktflächen des Kontaktkörpers in Form von Kegelstumpf-förmigen Ausnehmungen ausgebildet sind, wobei der Öffnungswinkel der Kegelstumpf-förmigen Ausnehmung des Kontaktkörpers höchstens um 5° kleiner ist als der Öffnungswinkel des Kegels der Elektrodenblock Endflächen.

7. Verfahren nach Anspruch 4, **dadurch gekennzeichnet, daß** die Endflächen der Elektrodenblöcke in Form von Pyramidenstümpfen und die Kontaktflächen des Kontaktkörpers in Form von Pyramidenstumpf-förmigen Ausnehmungen ausgebildet sind, wobei der Öffnungswinkel der Pyramidenstumpf-förmigen Ausnehmung des Kontaktkörpers um höchstens 5° kleiner ist als der Öffnungswinkel des Pyramidenstumpfes der Elektrodenblock-Endflächen.

8. Verfahren nach Anspruch 4, **dadurch gekennzeichnet, daß** die Endflächen der Elektrodenblöcke und die Kontaktflächen des Kontaktkörpers jeweils ein ineinandergreifendes kammförmiges oder zickzackförmiges Profil aufweisen, wobei die Profile so ausgebildet sind, daß das Verhältnis von Berührungsfläche zu der Querschnittsfläche an der betreffenden Stelle im Zentrum nicht mehr als 98 % desselben Verhältnisses -in den Außenbereichen der Elektrodenblöcke beträgt.

9. Verfahren nach Anspruch 1, **dadurch gekennzeichnet, daß** die Oberfläche des Fortsatzes mindestens 20 % der Endfläche der Elektrodenblöcke beträgt.

## Claims

1. A process for coating cathode blocks with graphite for the electrolytic production of aluminium by the longitudinal graphitisation method, **characterised in that** the cathode blocks are arranged in a longitudinal graphitisation furnace so that the conducting connection between the individual electrode blocks is formed by a conducting contact body that contacts the end faces of two successive electrode blocks and that has an upwardly directed extension on the side facing the upper side of the furnace, which extension does not project beyond the surface of the bed.

2. A process according to claim 1, **characterised in that** the contact body is formed of graphite.

3. A process according to claim 1, **characterised in that** the contact body is formed with the addition of natural graphite.

4. A process according to claim 1, **characterised in that** the end faces of the electrode blocks and the contact faces of the contact body are configured so that the current density in the centre of the end face of the electrode blocks is not more than 90% of the current density in the outer regions of the end faces of the electrode blocks.

5. A process according to claim 4, **characterised in that** the end faces of the electrode blocks are configured in the form of convex spherical caps and the contact faces of the contact body are configured in the form of concave spherical caps, wherein the radius of the concave spherical caps of the contact body is at most 98% of the radius of the spherical caps of the electrode block end faces.

6. A process according to claim 4, **characterised in that** the end faces of the electrode blocks are configured in the form of truncated cones and the contact faces of the contact body are configured in the form of truncated-cone-shaped recesses, in which the cone angle of the truncated-cone-shaped recess of the contact body is at most 5° smaller than the cone angle of the cone of the electrode block end faces.

7. A process according to claim 4, **characterised in that** the end faces of the electrode blocks are configured in the form of truncated pyramids and the contact faces of the contact body are configured in the form of truncated-pyramid-shaped recesses, in which the cone angle of the truncated-pyramid-shaped recess of the contact body is at most 5° smaller than the cone angle of the truncated pyramid of the electrode block end faces.

8. A process according to claim 4, **characterised in that** the end faces of the electrode blocks and the contact faces of the contact body in each case have a mutually engaging comb-shaped or zigzag-shaped profile, in which the profiles are configured so that the ratio of contact face to the cross-sectional face at the relevant point in the centre is not more than 98% of the same ratio in the outer regions of the electrode blocks.

9. A process according to claim 1, **characterised in that** the surface of the extension is at least 20% of the end face of the electrode blocks.

## Revendications

1. Procédé de graphitisation de blocs cathodiques pour l'obtention électrolytique d'aluminium selon la méthode de la graphitisation longitudinale,
**caractérisé en ce que**
dans un four de graphitisation longitudinale, les blocs cathodiques sont disposés de façon que la liaison conductrice entre les divers blocs d'électrodes est réalisée par un corps de contact conducteur qui est en contact avec les faces d'extrémité de deux blocs d'électrodes consécutifs et qui présente, sur la face tournée vers la face supérieure du four, un prolongement orienté vers le haut, qui ne dépasse pas de la surface du chargement.

2. Procédé selon la revendication 1,
**caractérisé en ce que**
le corps de contact est formé sur le graphite.

3. Procédé selon la revendication 1,
**caractérisé en ce que**
le corps de contact est formé par addition de graphite naturel.

4. Procédé selon la revendication 1,
**caractérisé en ce que**
les faces d'extrémité des blocs d'électrodes et les faces de contact du corps de contact sont formées pour que la densité de courant au centre de la face d'extrémité des blocs d'électrodes ne dépasse pas 90 % de la densité de courant dans les zones extérieures des faces d'extrémité des blocs d'électrodes.

5. Procédé selon la revendication 4,
**caractérisé en ce que**
les faces d'extrémité des blocs d'électrodes sont en forme de calottes convexes et les faces de contact du corps de contact en forme de calottes concaves, le rayon des calottes concaves du corps de contact étant égal au maximum à 98 % du rayon des calottes des faces d'extrémité du bloc d'électrodes.

6. Procédé selon la revendication 4,
**caractérisé en ce que**
les faces d'extrémité des blocs d'électrodes sont en forme de cônes tronqués et les faces de contact du corps de contact d'évidements coniques tronqués, l'angle d'ouverture de l'évidement en forme conique tronqué du corps de contact étant au maximum de 5° inférieur à l'angle d'ouverture du cône des faces d'extrémité du bloc d'électrodes.

7. Procédé selon la revendication 4,
**caractérisé en ce que**
les faces d'extrémité des blocs d'électrodes sont en forme de pyramides tronquées et les faces de contact du corps de contact en forme d'évidements en forme de pyramides tronquées, l'angle d'ouverture de l'évidement en forme de pyramide tronquée du corps de contact étant au maximum de 5° inférieur à l'angle d'ouverture de la pyramide tronquée des faces d'extrémité du bloc d'électrodes.

8. Procédé selon la revendication 4,
**caractérisé en ce que**
les faces d'extrémité des blocs d'électrodes et les faces de contact du corps de contact présentent respectivement un profil en forme de peigne ou en forme de zigzag imbriqué, les profils étant réalisés de façon que le rapport de la surface de contact à la superficie de la section à l'emplacement concerné est égal au centre à pas plus de 98 % du même rapport dans les zones extérieures des blocs d'électrodes.

9. Procédé selon la revendication 1,
**caractérisé en ce que**
la surface du prolongement est d'au moins 20 % de la surface d'extrémité des blocs d'électrodes.
